# EUROPÄISCHE PATENTSCHRIFT

(11) **EP 0 615 298 B1**
(45) Veröffentlichungstag und Bekanntmachung des Hinweises auf die Patenterteilung: **14.08.1996**
(21) Anmeldenummer: 94100913.6
(22) Anmeldetag: 22.01.1994
(51) Int. Cl.: H01M 8/02, H01M 2/20

(54) **Stromanschlusselement für Festelektrolyt-Brennstoffzellen**
Current supply connector for solid electrolyte fuel cells
Elément de connexion du courant pour piles à combustible à électrolyte solide

(30) Priorität: 11.03.1993 DE 4307666
(43) Veröffentlichungstag der Anmeldung: 14.09.1994
(73) Patentinhaber: DORNIER GmbH, D-88090 Immenstaad (DE)
(72) Erfinder: Koch, Alfred, Dipl.-Phys., D-88709 Meersburg (DE); Späh, Richard, Dr. Phys., D-88662 Überlingen (DE); Schäfer, Wolfgang, Dr. Phys., D-88048 Friedrichshafen (DE)
(74) Vertreter: Landsmann, Ralf, Dipl.-Ing.

(56) Entgegenhaltungen:
- EP-A- 0 338 823

## Beschreibung

Die Erfindung betrifft ein Bauelement zum Stromanschluß für stapelförmig angeordnete Festelektrolyt-Brennstoffzellen.

Festelektrolyt-Brennstoffzellen sind elektrochemische Energiewandler, die Strom direkt aus gasförmigen Energieträgern (z.B. H₂, CO, CH₄) erzeugen. Sie basieren in der Regel auf Zirkoniumoxid als Sauerstoff-Ionen-leitendem Festelektrolyt und werden bei Temperaturen von ca. 800 bis 1000°C betrieben. Da sie nicht wie Wärmekraftmaschinen der Carnot-Regel unterliegen, erreichen sie deutlich höhere Wirkungsgrade von über 50 %. Deshalb und wegen ihrer geringen Emission von Schadstoffen haben sie ein hohes Potential als zukünftige Energiewandler, speziell wenn sie Erdgas als Primärenergieträger verwenden.

Im Hinblick auf Wirtschaftlichkeit und hohe Energiedichte ist ein planares Zelldesign vorteilhaft. Bei dieser Anordnung sind dünne Festelektrolytplatten beidseitig mit porösen Elektroden beschichtet und diese abwechselnd mit Verbindungselementen übereinander gestapelt, so daß eine bipolare Anordnung entsteht. Mehrere Einzelzellen können seriengeschaltet werden.

Die für Brennstoffzellen beschriebenen Anordnungen können auch für den Umkehrprozeß der Hochtemperatur-Elektrolyse verwendet werden, um aus Wasser bei ca. 800 bis 1000°C mit hohem Wirkungsgrad Wasserstoff herzustellen.

Die bisher bekannten Techniken zur elektrischen Kontaktierung dieser Zellen (in oxidierender Umgebung) beruhen alle auf der Verwendung von Edelmetallen. Es besteht daher ein großes Interesse an der Entwicklung kostengünstiger Stromkollektoren auf der Basis edelmetallfreier Komponenten.

Zur flächigen Stromeinleitung in die Flachzellenstacks wurden bisher die Stackendplatten mit Leitplatinpaste beschichtet, und anschließend wurden Rahmen oder großmaschige Gitter aus Platindraht ebenfalls mit Leitplatinpaste an die Platinschicht gefügt. Externe edelmetallfreie Stromanschlüsse sind bisher nicht bekannt.

Zur internen Stromübertragung von z.B. keramischen Elektroden auf metallische Zellinterconnectoren werden ebenfalls Edelmetalle verwendet oder auch dünne Zwischenschichten aus leitfähigen Oxiden (EP 410 159 A1, EP 410 166 A1, EP 446 680 A1, EP 338 823 A1 sowie H. Tsumeirumi et al.: "Development of Solid Oxide Fuel Cell with Metallic Separator"). Um Diskrepanzen der thermischen Ausdehnungskoeffizienten auszugleichen, werden zum Teil aufwendige Konstruktionen ausgeführt (EP 410 159 A1).

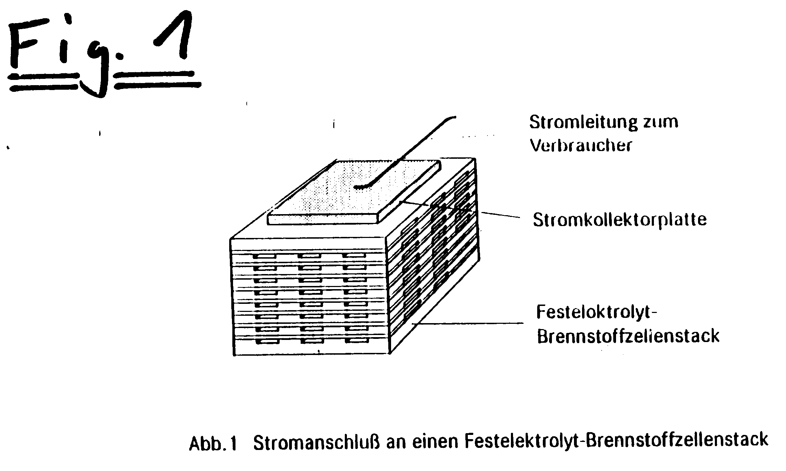

Fig. 1 zeigt den prinzipiellen Aufbau eines Stromanschlusses an einen Festelektrolyt-Brennstoffzellenstack von dem die Erfindung ausgeht. Auf dem Brennstoffzellenstack ist eine flächige Stromkollektorplatte angebracht. Diese ist mit der Stromleitung zum Verbraucher verbunden. Zweckmäßigerweise verwendet man zur Stromaufnahme von den Stackendplatten Stromkollektoren aus Metall, wobei Edelmetalle aus Gründen der Wirtschaftlichkeit ausgeschlossen sein sollen.

Eine direkte elektrische Verbindung zwischen der keramischen Endplatte des Brennstoffzellenstacks und der metallischen Anschlußplatte (aus Fe-, Co-, Cr- oder Ni-Legierungen) ist nicht möglich, weil starke Grenzflächenreaktionen mit der Bildung von isolierenden Schichten den Widerstand drastisch erhöhen.

Die Probleme dieser Stromübertragung konzentrieren sich auf den Keramik-Metall-Übergang und betreffen
a) die Anpassung des thermischen Ausdehnungskoeffizienten des metallischen Stromkollektors an den keramischen Zellenstack, um eine flächige und kraftschlüssige Verbindung auch über eine Temperaturdifferenz von Raumtemperatur bis Betriebstemperatur zu gewährleisten.
b) die elektrischen Eigenschaften der sich bei Betriebsbedingungen auf dem Stromkollektor bildenden Oxidschicht und ihr Wachstum.
c) den niederohmigen elektrischen Übergang über eine oder mehrere vergleichsweise schlecht leitende Zwischenschichten, was erfordert, daß der Übergang metallischer Stromkollektor - Zwischenschichtenkeramische Stackendplatte möglichst flächig, formschlüssig und mit geringstmöglichem Abstand sein sollte (das heißt möglichst dünne Zwischenschichten).

Der Erfindung liegt die Aufgabe zugrunde, eine bei 800 bis 1000°C in Luftatmosphäre funktionsfähige flächige, niederohmige und langzeitbeständige elektrische Verbindung zwischen einem Festelektrolyt-Brennstoffzellenstack und den Stromleitungen zu einem Verbraucher zu schaffen.

Diese Aufgabe wird mit einem Bauteil nach Anspruch 1 gelöst. Zweckmäßige Ausbildungen sowie Verwendungen des erfindungsgemäßen Bauteils sind Gegenstand weiterer Ansprüche.

Eine edelmetallfreie, flächige, niederohmige und dauerhafte Stromübertragung von der keramischen Endplatte eines Festelektrolyt-Zellstacks auf eine Verbraucherstromleitung kann über den folgenden Verbund von Stromkollektor - Zwischenschicht - Stackendplatte erreicht werden:
a) Zellseitige Keramikplatte der Zusammensetzung

   La₁₋ₓ Meₓ Cr_{1+σ-y} M_{y} O₃

   mit 0,0 ≤ x ≤ 0,3; 0 ≤ y ≤ 0,5 0 ≤ σ ≤ 0,05 wobei Me für Ca, Sr oder Mischungen hieraus und M für Al, Mg, Co, Fe oder Mischungen hieraus stehen
b) Zwischenschicht aus leitfähigem Glas, das einen Wärmeausdehnungskoeffizienten zwischen 8 · 10⁻⁶ K⁻¹ und 12 · 10⁻⁶ K⁻¹ im Temperaturbereich von 20 °C bis zur Transformationstemperatur, eine Transformationstemperatur unterhalb 1000°C und eine Mindestleitfähigkeit von 0,1 S · cm⁻¹ bei 1000°C aufweist, wobei das Glas bis zu 20 Gew.-% Alkalien oder Erdalkalien sowie ein oder mehrere Metalloxide mit mehreren Wertigkeitsstufen in einer Menge von 10 bis 85 Gew.-% enthält
c) Stromanschlußplatte aus einem Material mit einem Wärmeausdehnungskoeffizienten zwischen 8 · 10⁻⁶ K⁻¹ und 12 · 10⁻⁶ K⁻¹ im Temperaturbereich 20 bis 1000°C bestehend aus einer Chrom-, Eisen-, Nickel- oder Cobalt-Basislegierung, die bis zu 40 Gew.-% zusätzliche Legierungselemente sowie bis zu 10 Gew.-% dispergierte Oxide enthält.

Der wesentliche Inhalt dieser Erfindung besteht somit in der Angabe eines externen edelmetallfreien Stromanschlusses an einen Festelektrolyt-Brennstoffzellenstack, wobei dieser Anschlußteil aus einem Verbund von keramischer Stackendplatte, einer Fügeschicht aus einem bei Betriebbedingungen viskosen, elektrisch leitfähigen Glas und einer metallischen Stromkollektorplatte besteht, und gleichzeitig alle drei Fügepartner miteinander verträgliches thermisches Ausdehnungsverhalten zeigen.

Durch die aneinander angepaßten thermischen Ausdehnungskoeffizienten werden den Verbund gefährdende oder gar schädigende Spannungen, die bei den Temperaturwechseln von z.B. Raum- auf Betriebstemperatur auftreten, vermieden. Durch die viskosen Eigenschaften des Zwischenschichtmaterials bei Betriebstemperatur kann der Abstand Stromkollektorplatte - Stackendplatte auf ein Minimum reduziert und der Oberflächenkontakt maximiert werden. Dadurch und wegen der elektrischen Leitfähigkeit dieser Zwischenschicht ist ein niederohmiger Stromübergang gewährleistet. Des weiteren kann durch die viskose Zwischenschicht eine eventuell bei Betrieb auftretende Geometrieänderung z.B. das Quellen der Stackendplatte während der Brenngaseinleitung in den Stack aufgefangen werden.

Die Stromübertragung vom Stack auf die Stromkollektorplatte erfolgt völlig edelmetallfrei und kann über eine angeschweißte Verbraucherleitung, z.B. Drähte oder Bleche aus einer Nickel-, Cobalt- oder Eisenbasislegierung, fortgeführt werden.

Die Stromanschlußplatte kann z.B. aus einer Chromlegierung der Zusammensetzung 90 bis 100 % Cr und bis zu 10 % Seltenerdoxide oder Eisenoxide oder Mischungen aus beiden bestehen.

In einer Ausführung kann das erfindungsgemäße Stromanschlußelement über eine zusätzliche Schicht aus einem elektrisch leitfähigen Oxid mit der letzten Zelle des Brennstoffzellenstapels verbunden sein.

In einer weiteren Ausführung umfaßt das Bauteil Stromkollektorplatte und Stackendplatte, jedoch keine Zwischenschicht.

Die Herstellung des erfindungsgemäßen Verbundes erfolgt z.B. durch Siebdrucken und Heißpressen.

Das Stromanschlußelement kann auch als bipolare Platte innerhalb eines Brennstoffzellenstapels zur Serienschaltung der Zellen verwendet werden.

Die Erfindung wird anhand von Figuren näher beschrieben.

Es zeigen:
- Fig. 1: ein Festelektrolyt-Brennstoffzellenstack mit Stromanschluß wie in der Beschreibungseinleitung beschrieben,
- Fig. 2: ein erfindungsgemäßes Stromanschlußelement in schematischer Darstellung,
- Fig. 3: den Langzeitverlauf des Flächenwiderstands eines erfindungsgemäßen Bauteils.

### Beispiel

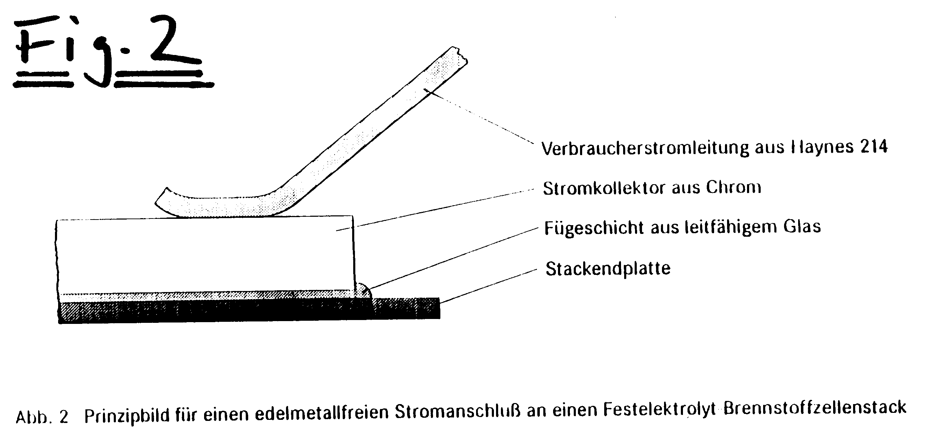

Im Langzeitbetrieb wurde der wie nachfolgend beschriebene und in Fig. 2 dargestellte externe Stromanschluß an einen Flachzellenstack getestet.

Die Zuleitungsdrähte aus der Superlegierung Nr. 214 der Firma Haynes (Ni-Basislegierung mit 16 Gew.-% Cr, 2,5 Gew.-% Fe, 4,5 Gew.-% Al sowie Spuren von Y mit Durchmesser 2 mm sind an Chromplatten - bestehend aus 99 % Cr und 1 % Y₂O₃ - mit 2 mm Dicke und einer Fläche von 25 x 25 mm angepunktet.

Die Chromplatte wiederum ist mittels elektrisch leitfähigem Glas - hergestellt unter Verwendung von Glasperlen aus Natriumsilikat der Kornfraktion 0 - 50 µm und 40 Vol.-% Eisen-(III) -oxid - an die Stackendplatten, bestehend aus La₀,₈₄ Sr_{0,16} Cr_{1,03} O₃ des Flachzellenstacks mit Membranen aus yttrium-stabilisiertem ZrO₂, das zusätzlich 4 Mol.-% Al₂O₃ enthält, angeschmolzen.

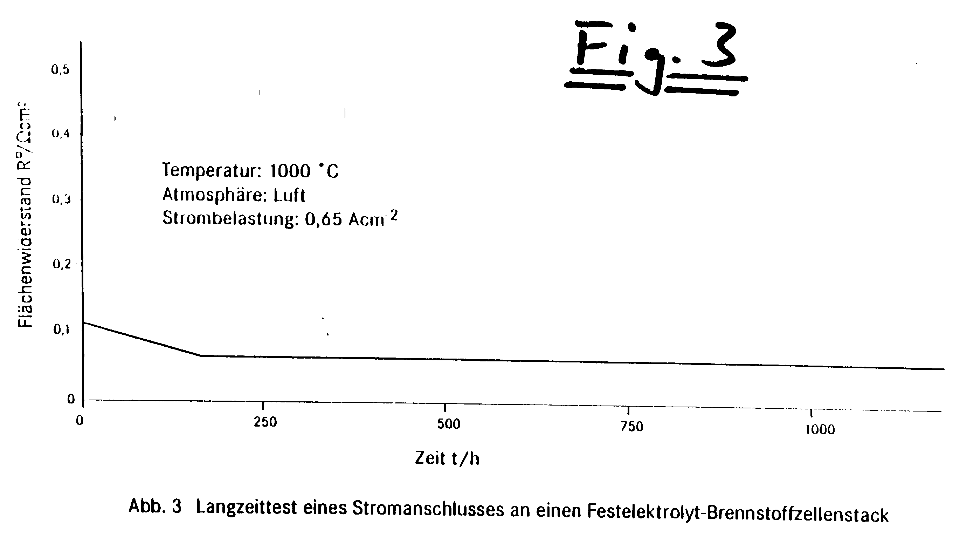

Für den elektrischen Übergang Haynes 214 - Draht - Chromplatte - leitfähiges Glas - Stackendplatte wurde bei 1000°C, Luftatmosphäre und einer Stromdichte von 0,65 A/cm² im Stromkollektor ein Flächenwiderstand von 130 mΩcm² als Anfangswert gemessen. Figur 3 zeigt die Beständigkeit dieses Flächenwiderstands bei 1000°C, Luftatmosphäre und einem Dauerstrom von 0,65 A/cm² über einen Zeitraum von mehr als 1000 h.

## Patentansprüche

1. Stromanschlußelement für planare Brennstoffzellen mit Festelektrolyt auf ZrO₂-Basis, **dadurch gekennzeichnet**, daß es aus einem Verbund der folgenden Komponenten besteht:
a) Zellseitige Keramikplatte der Zusammensetzung
La₁₋ₓMeₓ Cr_{1+σ-y} M_{y}O₃
mit 0,0 ≤ x ≤ 0,3; 0 ≤ y ≤ 0,5 0 ≤ σ ≤ 0,05 wobei Me für Ca, Sr oder Mischungen hieraus und M für Al, Mg, Co, Fe oder Mischungen hieraus stehen
b) Zwischenschicht aus leitfähigem Glas, das einen Wärmeausdehnungskoeffizienten zwischen 8 · 10⁻⁶ K⁻¹ und 12 · 10⁻⁶ K⁻¹ im Temperaturbereich von 20 °C bis zur Transformationstemperatur, eine Transformationstemperatur unterhalb 1000°C und eine Mindestleitfähigkeit von 0,1 S · cm⁻¹ bei 1000°C aufweist, wobei das Glas bis zu 20 Gew.-% Alkalien oder Erdalkalien sowie ein oder mehrere Metalloxide mit mehreren Wertigkeitsstufen in einer Menge von 10 bis 85 Gew.-% enthält
c) Stromanschlußplatte aus einem Material mit einem Wärmeausdehnungskoeffizienten zwischen 8 · 10⁻⁶ K⁻¹ und 12 · 10⁻⁶ K⁻¹ im Temperaturbereich 20 bis 1000°C bestehend aus einer Chrom-, Eisen-, Nickel- oder Cobalt-Basislegierung, die bis zu 40 Gew.-% zusätzliche Legierungselemente sowie bis zu 10 Gew.-% dispergierte Oxide enthält.

2. Stromanschlußelement nach Anspruch 1, dadurch gekennzeichnet, daß die Stromanschlußplatte aus einer Chromlegierung der Zusammensetzung 90 bis 100 Gew.-% Cr und bis zu 10 Gew.-% Seltenerdoxide oder Eisenoxide oder aus Mischungen beider Oxide besteht.

3. Stromanschlußelement nach einem der vorangehenden Ansprüche, dadurch gekennzeichnet, daß an die Stromanschlußplatte Stromanschlußdrähte oder -bleche aus einer Nickel-, Cobalt- oder Eisenbasislegierung angeschlossen sind.

4. Stromanschlußelement nach einem der vorangehenden Ansprüche, dadurch gekennzeichnet, daß die Zwischenschicht aus einem vorwiegend oxidischen Werkstoff mit einer Mindestleitfähigkeit von 0,1 S · cm⁻¹ bei 1000 ^{o}C besteht.

5. Stromanschlußelement nach einem der vorangehenden Ansprüche, dadurch gekennzeichnet, daß die Zwischenschicht aus einem oxidischen Glas mit die Leitfähigkeit erhöhenden Kationen besteht.

6. Stromanschlußelement nach einem der vorangehenden Ansprüche, dadurch gekennzeichnet, daß es mit der letzten Zelle des Brennstoffzellenstapels über eine zusätzliche Schicht aus einem elektrisch leitfähigen Oxid verbunden ist.

7. Verfahren zur Herstellung eines Stromanschlußelements nach einem der vorangehenden Ansprüche, **dadurch gekennzeichnet,** daß Siebdruck- und Heißpressverfahren eingesetzt werden.

8. Verwendung eines Stromanschlußelements nach Anspruch 1, 4 oder 5 als bipolare Platte innerhalb eines Brennstoffzellenstapels zur Serienschaltung der Zellen.

## Claims

1. Current connection element for planar fuel cells having a solid electrolyte based on ZrO₂, characterised in that it comprises a composite having the following components:
a) cell-side ceramic plate having the composition
La₁₋ₓMeₓCr_{1+σ-y}M_{y}O₃
with 0.0 ≤ x ≤ 0.3; 0 ≤ y ≤ 0.5; 0 ≤ σ ≤ 0.05, wherein Me represents Ca, Sr or mixtures thereof and M represents Al, Mg, Co, Fe or mixtures thereof;
b) intermediate layer of conductive glass which has a thermal expansion coefficient of between 8·10⁻⁶K⁻¹ and 12·10⁻⁶K⁻¹ in the temperature range of from 20°C to the transformation temperature, a transformation temperature of less than 1000°C and a minimum conductivity of 0.1 S·cm⁻¹ at 1000°C, the glass containing up to 20% by weight of alkalies or alkaline earths and from 10 to 85% by weight of one or more metal oxides having several valency stages;
c) current connection plate composed of a material having a thermal expansion coefficient of between 8·10⁻⁶K⁻¹ and 12·10⁻⁶K⁻¹ in the temperature range of from 20 to 1000°C and comprising a chromium-, iron-, nickel- or cobalt-based alloy which contains up to 40% by weight of additional alloy elements and up to 10% by weight of dispersed oxides.

2. Current connection element according to Claim 1, characterised in that the current connection plate comprises a chromium alloy having a composition of from 90 to 100% by weight of Cr and up to 10% by weight of rare earth oxides or iron oxides or mixtures of the two oxides.

3. Current connection element according to either of the preceding claims, characterised in that current connection wires or sheets of a nickel-, cobalt- or iron-based alloy are connected to the current connection plate.

4. Current connection element according to any one of the preceding claims, characterised in that the intermediate layer comprises a material which is predominantly in oxide form and which has a minimum conductivity of 0.1 S·cm⁻¹ at 1000°C.

5. Current connection element according to any one of the preceding claims, characterised in that the intermediate layer comprises an oxide glass having conductivity-increasing cations.

6. Current connection element according to any one of the preceding claims, characterised in that it is connected to the last cell of the fuel cell stack by way of an additional layer of an electrically conductive oxide.

7. Process for the manufacture of a current connection element according to any one of the preceding claims, characterised in that screen printing and hot pressing processes are used.

8. Use of a current connection element according to Claim 1, 4 or 5 as a bipolar plate within a fuel cell stack for the series connection of the cells.

## Revendications

1. Elément de connexion de courant pour piles à combustible planes à électrolyte solide à base de ZrO₂, caractérisé en ce qu'il est constitué de la combinaison des composants suivants :
a) plaque céramique côté pile, de composition
La₁₋ₓMeₓCr_{1+σ-y}M_{y}O₃
où 0,0 ≤ x ≤ 0,3 ; 0 ≤ y ≤ 0,5 ; 0 ≤ σ ≤ 0,05, sachant que Me est du Ca, du Sr ou des mélanges de ces éléments et M est de l'Al, du Mg, du Co, du Fe ou des mélanges de ces éléments,
b) couche intermédiaire en verre conducteur présentant un coefficient de dilatation thermique compris entre 8 · 10⁻⁶K⁻¹ et 12 · 10⁻⁶K⁻¹ dans la plage de températures allant de 20 °C à la température de transformation, une température de transformation inférieure à 1 000 °C et une conductibilité minimale de 0,1 S · cm⁻¹ à 1 000 °C, le verre contenant jusqu'à 20 % en poids d'alcalins ou d'alcalino-terreux ainsi qu'un ou plusieurs oxydes métalliques à plusieurs valences dans une proportion de 10 à 85 % en poids,
c) plaque de connexion de courant réalisée en un matériau qui présente un coefficient de dilatation thermique compris entre 8 · 10⁻⁶K⁻¹ et 12 · 10⁻⁶K⁻¹ dans la plage de températures allant de 20 à 1 000 °C et qui est constitué d'un alliage à base de chrome, de fer, de nickel ou de cobalt contenant jusqu'à 40 % en poids d'éléments d'alliage supplémentaires ainsi que jusqu'à 10 % en poids d'oxydes dispersés.

2. Elément de connexion de courant selon la revendication 1, caractérisé en ce que la plaque de connexion de courant est réalisée en un alliage de chrome composé de 90 à 100 % en poids de Cr et jusqu'à 10 % en poids d'oxydes de terres rares ou d'oxydes de fer ou de mélanges de ces deux oxydes.

3. Elément de connexion de courant selon l'une des revendications précédentes, caractérisé en ce que des fils ou des tôles de connexion de courant en alliage à base de nickel, de cobalt ou de fer sont connectés à la plaque de connexion de courant.

4. Elément de connexion de courant selon l'une des revendications précédentes, caractérisé en ce que la couche intermédiaire est réalisée dans un matériau à prédominance d'oxyde possédant une conductibilité minimale de 0,1 S cm⁻¹ à 1 000 °C.

5. Elément de connexion de courant selon l'une des revendications précédentes, caractérisé en ce que la couche intermédiaire est réalisée dans un verre d'oxyde possédant des cations qui en augmentent la conductibilité.

6. Elément de connexion de courant selon l'une des revendications précédentes, caractérisé en ce qu'il est relié au dernier élément de l'empilement d'éléments de pile à combustible par l'intermédiaire d'une couche supplémentaire en oxyde électroconducteur.

7. Procédé pour fabriquer un élément de connexion de courant selon l'une des revendications précédentes, caractérisé en ce que des procédés de sérigraphie et de pressage à chaud sont mis en oeuvre.

8. Utilisation d'un élément de connexion de courant selon la revendication 1, 4 ou 5 comme plaque bipolaire à l'intérieur d'un empilement d'éléments de pile à combustible pour la connexion en série des éléments de pile.
